# EUROPÄISCHE PATENTSCHRIFT

(11) **EP 3 983 260 B1**
(45) Veröffentlichungstag und Bekanntmachung des Hinweises auf die Patenterteilung: **17.01.2024**
(21) Anmeldenummer: 20733380.8
(22) Anmeldetag: 10.06.2020
(51) Int. Cl.: B60N 2/06, F16H 25/20

(54) **LÄNGSEINSTELLER UND FAHRZEUGSITZ**
LONGITUDINAL ADJUSTER AND VEHICLE SEAT
RÉGLAGE LONGITUDINAL ET SIÈGE DE VÉHICULE

(30) Priorität: 14.06.2019 DE 102019116315; 27.08.2019 DE 102019122928
(43) Veröffentlichungstag der Anmeldung: 20.04.2022
(73) Patentinhaber: KEIPER Seating Mechanisms Co., Ltd., Shanghai, 201315 (CN)
(72) Erfinder: GREGOR, Peter, 91311 Trencianske Stankovce (SK); SCHUERMANN, Thorsten, 51519 Odenthal (DE); SPRENGER, Erik, 42929 Wermelskirchen (DE); STEMMER, Juergen, 42897 Remscheid (DE); SULAK, Andrej, 95652 Podluzany (SK)
(74) Vertreter: Kutzenberger Wolff & Partner
(86) Internationale Anmeldenummer: PCT/EP2020/066113
(87) Internationale Veröffentlichungsnummer: WO 2020/249624

(56) Entgegenhaltungen:
- WO-A2-2008/070646
- JP-A- 2008 056 003
- JP-A- 2008 222 034

## Beschreibung

Die Erfindung betrifft einen Längseinsteller, insbesondere für einen Fahrzeugsitz, der Längseinsteller aufweisend mindestens ein Schienenpaar, welches aus einer ersten Schiene und einer relativ zur ersten Schiene in Längsrichtung verschiebbaren zweiten Schiene gebildet ist, wobei die Schienen unter Bildung eines Innenkanals einander wechselseitig umgreifen, wobei in dem Innenkanal eine mit der zweiten Schiene gelagerte Spindelmutter und eine mit der Spindelmutter wirkverbundene Spindel angeordnet sind, wobei an einem Ende der ersten Schiene ein mittels eines Motors antreibbares und mit der Spindel zusammenwirkendes Getriebe angeordnet ist. Die Erfindung betrifft ferner einen Fahrzeugsitz.

### Stand der Technik

Aus der DE 10 2005 023 095 A1 ist eine Antriebsvorrichtung für einen Kraftfahrzeugsitz in einer Gleitvorrichtung bekannt. Die Antriebsvorrichtung zur Anwendung mit einer Kraftfahrzeugsitz-Gleitvorrichtung umfasst zusammenpassende feste und bewegliche Schienenteile, die zwischen einer vorderen Stellung und einer hinteren Stellung bewegt werden können. Die Antriebsvorrichtung umfasst eine verlängerte Spindel, eine Spindelmutter, ein Getriebe und eine Einbauvorrichtung. Die Spindel definiert eine Spindelachse und hat ein sich in Längsrichtung erstreckendes Spindelgewinde. Die Spindelmutter kann sicher auf einem ersten Schienenteil befestigt werden und hat ein Innengewinde, das in das Spindelgewinde eingreifen kann. Das Getriebe kann an ein jeweils anderes Schienenteil montiert werden und dreht selektiv die Spindel um die Spindelachse. Die Spindel der Antriebsvorrichtung ist mit einem Spindelrad versehen, das sich in montiertem Zustand der Antriebsvorrichtung durch Spindelradöffnungen des beweglichen Schienenteils nach außen erstreckt.

Aus der DE 10 2006 000 193 A1 ist eine Sitzgleitvorrichtung bekannt, welche ein System mit einer schwimmenden Gewindespindel und einer feststehenden Mutter aufweist. Die Mutter ist an der unteren Schiene befestigt, während sich die Gewindespindel durch sie dreht, so dass sich die obere Struktur vorwärts und rückwärts bewegen kann. Sobald dieses System angewendet wird, wird die Mutter an der unteren Schiene befestigt.

Aus der DE 10 2008 024 141 A1 ist eine Spindel-Lageranordnung für ein Sitzlängsverstellgetriebe bekannt, welche ein Gehäuse aufweist, das mit einer Befestigungsanordnung an einer fahrzeugseitigen Komponente oder an einer sitzseitigen Komponente befestigbar ist, wobei eine Spindelöffnung zum Durchführen einer Spindel längs einer Spindelöffnungsachse durch das Gehäuse durchführt und wobei ein Innengewinde im Gehäuse im Bereich von dessen Spindelöffnung zum Eingreifen in eine derart hindurchgeführte Spindel ausgebildet ist zum Verstellen des Gehäuses und der Spindel relativ zueinander längs der Spindelöffnungsachse. Die Spindel-Lageranordnung sieht vor, dass das Innengewinde in einer Spindelmutter ausgebildet ist und die Spindelmutter im Gehäuse relativ zu der Spindelöffnungsachse verstellbar gelagert ist.

Eine ähnliche Lageranordnung ist aus der DE 696 20 623 T2 sowie der DE 10 2004 036 735 B4 bekannt.

Aus der DE 10 2014 201 582 A1 ist eine alternative Antriebsvorrichtung für einen Kraftfahrzeugsitz bekannt, welche eine in einer fahrzeugfesten ersten Schiene rotationsfest gehaltene Spindel in Verbindung mit einem in einer sitzfesten zweiten Schiene gehaltenen angetrieben Spindelgetriebe aufweist. Derartige Antriebsvorrichtungen weisen keine feststehende Spindelmutter auf.

WO 2008/070646 A2 beschreibt eine einstellbare Fahrzeugsitzanordnung mit einem Schienensystem und einem Antriebssystem zur motorischen Einstellung der Sitzposition in einem Fahrzeug.

JP 2008 056003 A beschreibt ein elektrisches Sitzverstellgerät, das mit einer unteren Schiene versehen ist, eine relativ zur unteren Schiene verschiebbare obere Schiene, eine Schraubenwelle, die an der Innenseite der oberen Schiene gelagert ist und gedreht/angetrieben wird, und ein Mutterelement aufweist, das mit der Schraubenwelle verschraubt und mit der unteren Schiene durch eine Schraube verbunden ist, die in ein Durchgangsloch eindringt, das an der unteren Schiene ausgebildet ist. Ein Dämpfungsgummi ist zwischen dem Mutterelement und der unteren Schiene als ein stoßdämpfendes Teil in einer vertikalen Richtung zum Absorbieren einer Kernabweichung in der vertikalen Richtung der Schraubenwelle und des Mutterelements vorgesehen.

### Aufgabe

Der Erfindung liegt die Aufgabe zu Grunde, einen Längseinsteller eingangs genannter Art zu verbessern, insbesondere einen Längseinsteller mit einer feststehenden Spindelmutter bereitzustellen, welche eine Spielfreistellung und Toleranzkompensation im Bereich der Spindelmutter ermöglicht, sowie einen entsprechenden Fahrzeugsitz bereitzustellen.

### Lösung

Diese Aufgabe wird erfindungsgemäß gelöst durch einen Längseinsteller nach Anspruch 1.

Dadurch, dass die Spindelmutter derart an der zweiten Schiene fixiert ist, dass die Spindelmutter einen Freiheitsgrad von wenigstens eins aufweist, lassen sich fertigungsbedingte Toleranzen sowie ein Spiel zwischen den einzelnen Komponenten, insbesondere während der Montage, ausgleichen.

Dass das "Fixiermittel fest mit der zweiten Schiene verbunden ist" ist allgemein derart zu verstehen, dass das Fixiermittel die Spindelmutter zumindest in einem normalen Gebrauchszustand des Längseinstellers zur zweiten Schiene spielfrei sichert, ohne jedoch den Freiheitsgrad zu beeinflussen.

Vorteilhafte Ausgestaltungen, welche einzeln oder in Kombination miteinander eingesetzt werden können, sind Gegenstand der Unteransprüche.

Die erste Schiene ist bevorzugt eine mit einem Fahrzeugsitz verbindbare Sitzschiene. Die zweite Schiene ist bevorzugt eine mit einer Fahrzeugstruktur verbindbare Bodenschiene. Ein möglicher innerer Aufbau sowie die Wirkweise und Funktion des Spindelgetriebes ist beispielsweise aus der DE 10 2013 207 665 A1 bekannt.

Die Spindel kann an einem vorderen Endabschnitt der Spindel in dem Spindelgetriebe und an einem hinteren Endabschnitt der Spindel in einem Drehlager der ersten Schiene gelagert sein.

Die Crashbolzen können Schrauben sein. Die Crashbolzen können Gewindebolzen sein. Die Crashbolzen können durch je eine erste Öffnung, insbesondere für die Crashbolzen, in der zweiten Schiene hindurchgeführt sein. Ferner kann ein jeweils einen Crashbolzen in radialer Richtung umlaufender Spalt zur zweiten Schiene, insbesondere zu den ersten Öffnungen der zweiten Schiene, vorgesehen sein.

Die Spindelmutter weist einen Grundkörper auf.

Der Grundkörper der Spindelmutter weist im Bereich der Crashbolzen je eine Schulter auf, welche einen Abstand zwischen einem Kopf des jeweiligen Crashbolzens und dem Grundkörper definiert. Hierbei kann ein die Schulter umlaufender Spalt zur zweiten Schiene, insbesondere zu den ersten Öffnungen der zweiten Schiene, vorgesehen sein.

Alternativ weisen die Crashbolzen je eine an einen Kopf des jeweiligen Crashbolzens angrenzende Schulter auf, welche einen Abstand zwischen dem Kopf und der Spindelmutter, insbesondere dem Grundkörper der Spindelmutter, definiert.

Die Spindelmutter ist mittels eines in Längsrichtung betrachtet mittig angeordneten Fixiermittels fest mit der zweiten Schiene verbunden. Die zweite Schiene kann hierzu eine zweite Öffnung aufweisen. Ein Innendurchmesser der zweiten Öffnung ist bevorzugt an einen Außendurchmesser des Fixiermittels angepasst. Das Fixiermittel ist eine Schraube oder ein Bolzen, insbesondere ein Gewindebolzen.

An dem Grundkörper der Spindelmutter kann im Bereich des Fixiermittels ein, insbesondere parallel zu einer Spindelachse und vorzugsweise mittig angeordneter, Vorsprung vorgesehen sein, welcher einen Abstand zwischen dem Grundkörper und der zweiten Schiene, insbesondere einer in Richtung des Innenkanals orientierten Oberseite der zweiten Schiene, definiert. Im Bereich der Spindelmutter kann die zweite Schiene einen Vorsprung aufweisen, welcher einen Abstand zwischen der Spindelmutter und der zweiten Schiene, insbesondere einer in Richtung des Innenkanals orientierten Oberseite der zweiten Schiene, definiert. Der Vorsprung der zweiten Schiene kann mittels einer Prägung erzeugt sein. Zwischen dem Grundkörper der Spindelmutter und der zweiten Schiene kann in einem nicht erfindungsgemäßen Beispiel ein Lagerelement angeordnet sein. Das Lagerelement kann eine Unterlegscheibe sein. Das Lagerelement kann ein Blech sein. Das Lagerelement kann einen Vorsprung, insbesondere einen parallel zur Spindelachse mittig angeordneten Vorsprung, aufweisen. Das Lagerelement kann einen Abstand zwischen dem Grundkörper und der zweiten Schiene definieren.

Der Freiheitsgrad kann einem Verschwenken der Spindelmutter um eine im Wesentlichen horizontal verlaufende Achse entsprechen. Der Freiheitsgrad kann einem Verschwenken der Spindelmutter um eine im Wesentlichen horizontal und parallel zu einer Querrichtung verlaufende Achse entsprechen. Hierdurch kann es aufgrund von hohen Lasten in Crashsituationen in vorteilhafter Weise ermöglicht sein, dass die Spindelmutter insbesondere um einen Kontaktbereich zwischen dem Vorsprung und der zweiten Schiene, kippbar oder schwenkbar ist. Die zweite Schiene kann bevorzugt aus Metall, insbesondere Federstahl, gefertigt sein. Die zweite Schiene kann bereichsweise federnde Eigenschaften eines Federblechs aufweisen.

Der Freiheitsgrad kann einer Drehung der Spindelmutter um eine im Wesentlichen vertikal verlaufende Achse, insbesondere eine Achse des Fixiermittels, entsprechen. Der Freiheitsgrad kann einer Bewegung der Spindelmutter in einer Vertikalrichtung entsprechen. Der Freiheitsgrad kann einer Schwenkung der Spindelmutter um eine im Wesentlichen horizontal verlaufende Achse, insbesondere entlang einer gedachten Verbindungslinie zwischen den beiden Crashbolzen, entsprechen. Unter einem "Freiheitsgrad" im Sinne der vorliegenden Erfindung wird allgemein eine Anzahl der voneinander unabhängigen Bewegungsmöglichkeiten verstanden.

In einem nicht erfindungsgemäßen Beispiel kann zwischen dem Grundkörper der Spindelmutter und der zweiten Schiene ein elastisches Mittel angeordnet sein. In einem nicht erfindungsgemäßen Beispiel kann zwischen dem Grundkörper der Spindelmutter und der zweiten Schiene eine Metallfeder, insbesondere eine metallische Blattfeder, angeordnet sein. In einem nicht erfindungsgemäßen Beispiel kann zwischen dem Grundkörper der Spindelmutter und der zweiten Schiene ein Puffer, insbesondere ein flacher Puffer, aus einem Kunststoff, insbesondere einem Gummi, angeordnet sein. In einem nicht erfindungsgemäßen Beispiel kann zwischen dem Kopf der Crashbolzen und der zweiten Schiene je ein Puffer, insbesondere ein ringförmiger Puffer, aus einem Kunststoff, insbesondere einem Gummi, angeordnet sein.

Der Puffer kann aus einem Kunststoff, insbesondere einem Gummi, gefertigt sein. Der Puffer kann aus Metall gefertigt sein. Der Puffer kann einerseits aus Metall und andererseits aus Kunststoff oder Gummi gefertigt sein. Dabei kann eine Seite des Puffers aus Metall gefertigt sein und eine andere Seite des Puffers aus Kunststoff und/oder Gummi gefertigt sein.

Ein Durchmesser der Spindel kann gegenüber aus dem Stand der Technik bekannten Spindeln erhöht sein. Die Spindelmutter ist vorzugsweise einteilig ausgestaltet. Die Spindelmutter kann in vorteilhafter Weise eine Spielreduzierung bzw. eine Kompensation von Fertigungstoleranzen ermöglichen.

Die Aufgabe wird ferner erfindungsgemäß gelöst durch einen Fahrzeugsitz mit einem zuvor beschriebenen Längseinsteller.

### Figuren und Ausführungsformen der Erfindung

Bevor nachfolgend Ausgestaltungen der Erfindung eingehender an Hand von Figuren beschrieben werden, ist zunächst festzuhalten, dass die Erfindung nicht auf die beschriebenen Komponenten beschränkt ist. Weiterhin stellt auch die verwendete Terminologie keine Einschränkung dar, sondern hat lediglich beispielhaften Charakter. Soweit nachfolgend in der Beschreibung und den Ansprüchen der Singular verwendet wird ist dabei jeweils der Plural mitumfasst, soweit der Kontext dies nicht explizit ausschließt.

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:
- Fig. 1:: schematisch einen erfindungsgemäßen Fahrzeugsitz,
- Fig. 2:: einen erfindungsgemäßen Längseinsteller des Fahrzeugsitzes von Fig. 1,
- Fig. 3:: eine perspektivische Ansicht eines Schienenpaares des Längseinstellers von Fig. 2,
- Fig. 4:: einen Längsschnitt des Schienenpaares von Fig. 3,
- Fig. 5:: eine ausschnittsweise vergrößerte perspektivische Darstellung einer Spindelmutter gemäß eines ersten Ausführungsbeispiels,
- Fig. 6:: einen Längsschnitt der Spindelmutter von Fig. 5,
- Fig. 7:: eine ausschnittsweise vergrößerte perspektivische Darstellung einer Spindelmutter gemäß eines zweiten Ausführungsbeispiels,
- Fig. 8:: einen Längsschnitt der Spindelmutter von Fig. 7,
- Fig. 9:: eine ausschnittsweise vergrößerte perspektivische Darstellung einer Spindelmutter gemäß eines dritten, nicht erfindungsgemäßen Beispiels,
- Fig. 10:: einen Längsschnitt der Spindelmutter von Fig. 9,
- Fig. 11:: eine ausschnittsweise vergrößerte perspektivische Darstellung einer Spindelmutter gemäß eines vierten, nicht erfindungsgemäßen Beispiels, und
- Fig. 12:: einen Längsschnitt der Spindelmutter von Fig. 11.

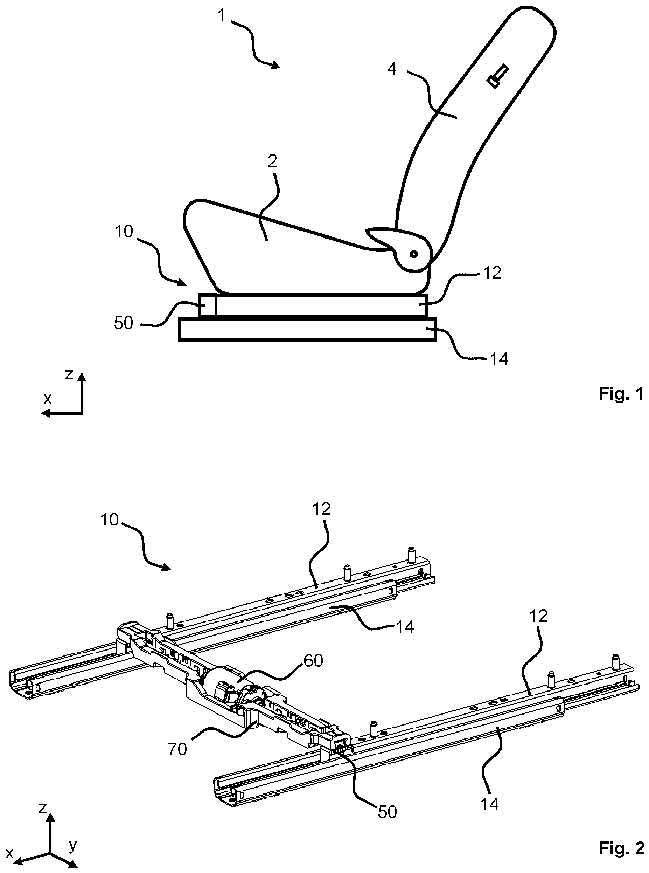

Ein in Figur 1 schematisch dargestellter Fahrzeugsitz 1 wird nachfolgend unter Verwendung von drei senkrecht zueinander verlaufenden Raumrichtungen beschrieben. Eine Längsrichtung x verläuft bei einem im Fahrzeug eingebauten Fahrzeugsitz 1 weitgehend horizontal und vorzugsweise parallel zu einer Fahrzeuglängsrichtung, die der gewöhnlichen Fahrtrichtung des Fahrzeuges entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 1 verläuft die Vertikalrichtung z parallel zu der Fahrzeughochachse.

Die verwendeten Positionsangaben und Richtungsangaben, wie beispielsweise vorne, hinten, oben und unten beziehen sich auf eine Blickrichtung eines im Fahrzeugsitz 1 sitzenden Insassen in normaler Sitzposition, wobei der Fahrzeugsitz 1 im Fahrzeug eingebaut, in einer zur Personenbeförderung geeigneten Gebrauchsposition mit aufrecht stehender Lehne 4 und wie üblich in Fahrtrichtung ausgerichtet ist. Der Fahrzeugsitz 1 kann jedoch auch in abweichender Ausrichtung, beispielsweise quer zur Fahrtrichtung verbaut werden.

Der in Fig. 1 gezeigte Fahrzeugsitz 1 für ein Kraftfahrzeug weist ein Sitzteil 2 und die relativ zum Sitzteil 2 in ihrer Neigung einstellbare Lehne 4 auf. Eine Neigung der Lehne 4 kann beispielsweise mittels eines Rastbeschlages oder eines Getriebebeschlages einstellbar sein. Der Fahrzeugsitz 1 ist zur Einstellung einer Sitzlängsposition auf einem Längseinsteller 10 montiert.

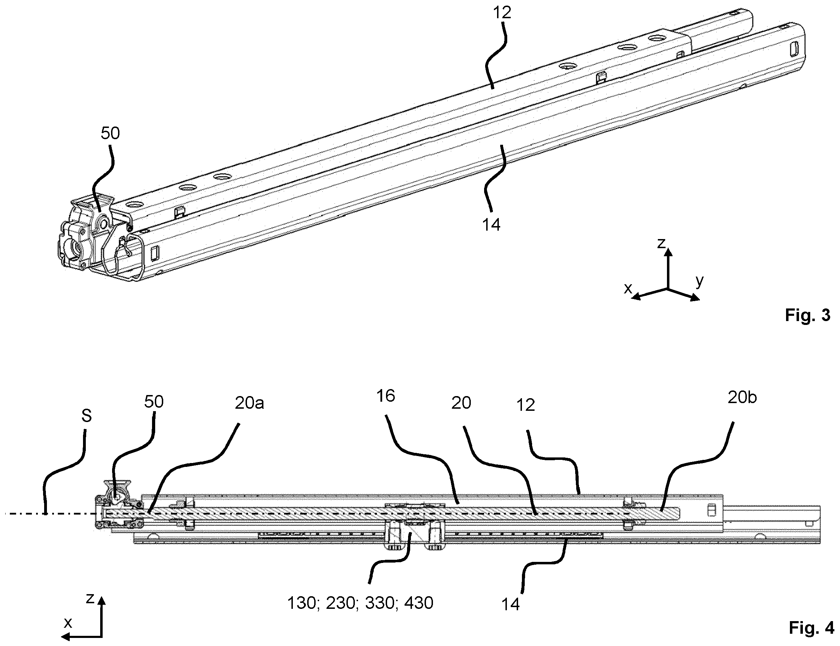

Fig. 2 zeigt den erfindungsgemäßen Längseinsteller 10, des Fahrzeugsitzes 1. Der Längseinsteller 10 weist wenigstens ein Schienenpaar, vorliegend zwei Schienenpaare auf. Fig. 3 zeigt eines der Schienenpaare des Längseinstellers 10 von Fig. 2.

Die Schienenpaare sind jeweils aus einer ersten Schiene 12, insbesondere zur Verbindung mit einer Sitzstruktur des Fahrzeugsitzes 1, und einer zweiten Schiene 14, insbesondere zur Verbindung mit einer Fahrzeugstruktur, gebildet. Die Schienen 12, 14 des Schienenpaares sind in Längsrichtung x relativ zueinander verschiebbar und umgreifen unter Bildung eines Innenkanals 16 einander wechselseitig. In dem Innenkanal 16 ist eine an der zweiten Schiene 14 gelagerte, vorliegend insbesondere drehtest, mit der zweiten Schiene 14 verbundene Spindelmutter 130; 230; 330; 430 und eine mit der Spindelmutter 130; 230; 330; 430 wirkverbundene Spindel 20 angeordnet. Die Spindel 20 erstreckt sich entlang einer Spindelachse S parallel zur Längsrichtung x. An einem vorderen Ende der ersten Schiene 12 ist ein mittels eines Motors 60 antreibbares und die Spindel 20 antreibendes Spindelgetriebe 50 angeordnet. Der Motor 60 ist auf einem zwischen den beiden Spindelgetrieben 50 der jeweiligen Schienenpaare montierten Motorträger 70 gehalten und treibt mittels einer in Fig. 2 nicht dargestellten Welle die beiden Spindelgetriebe 50 an.

Fig. 4 zeigt einen Längsschnitt des Schienenpaares von Fig. 3. Das Spindelgetriebe 50 lagert einen vorderen Endabschnitt 20a der Spindel 20. Die Spindelmutter 130; 230; 330; 430 ist in vorliegend dargestelltem Zustand mittig entlang der Länge der Spindel 20 angeordnet. Durch ein Drehen der Spindel 20 um die Spindelachse S schraubt sich die Spindelmutter 130; 230; 330; 430 in Abhängigkeit der Drehrichtung entlang eines Außengewindes der Spindel 20 in oder entgegen der Längsrichtung x und verschiebt dadurch die erste Sitzschiene 12 relativ zur zweiten Sitzschiene 14. Dabei verschiebt sich entsprechend auch eine Relativposition zwischen der Spindel 10 und der Spindelmutter 130; 230; 330; 430.

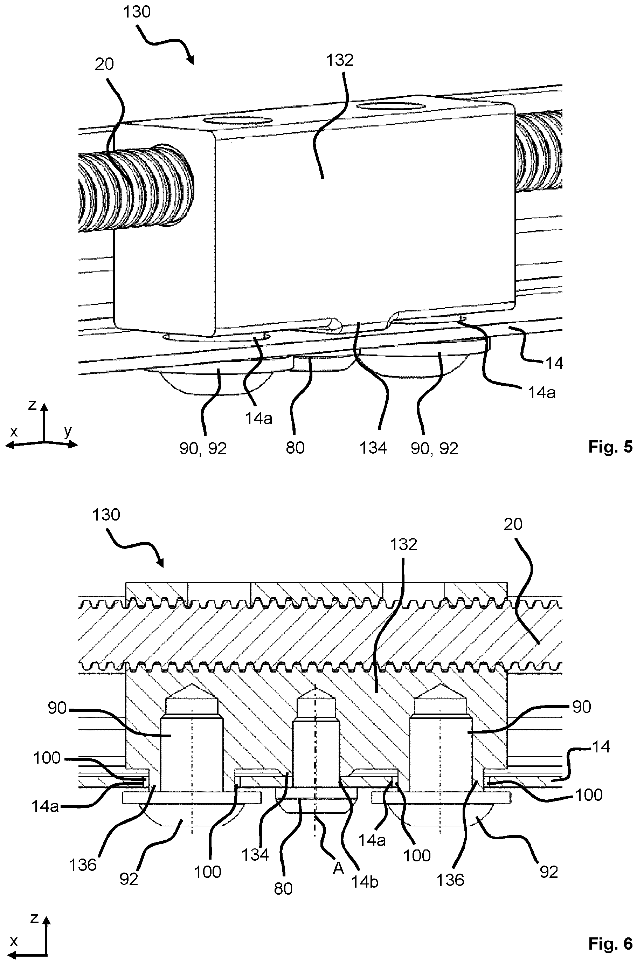

Die Figuren 5 und 6 zeigen die Spindelmutter 130 gemäß eines ersten Ausführungsbeispiels. Die Spindelmutter 130 weist einen Grundkörper 132 auf. Die Spindelmutter 130 weist eine, insbesondere parallel zur Längsrichtung x orientierte, durchgehende Gewindebohrung mit einem Innengewinde auf. Das Innengewinde der Spindelmutter 130 steht mit einem Außengewinde der Spindel 20 in Wirkverbindung.

Die Spindelmutter 130 ist mittels zweier Crashbolzen 90 mit der zweiten Schiene 14 verbunden. Hierzu weist die zweite Schiene 14 zwei erste Öffnungen 14a auf, durch welche je ein Crashbolzen 90 hindurchgeführt ist. Ferner ist ein die Crashbolzen 90 umlaufender Spalt 100 zur zweiten Schiene 14 vorgesehen. Die Spindelmutter 130 ist mittels eines Fixiermittels 80, insbesondere eines in Längsrichtung x betrachtet mittig zwischen den Crashbolzen 90 angeordneten Fixiermittels 80, fest mit derzweiten Schiene 14 verbunden. Hierzu weist die zweite Schiene 14 eine zweite Öffnung 14b für das Fixiermittel 80 auf. Der Innendurchmesser des zweiten Öffnung 14b ist an einen Außendurchmesser des Fixiermittels 80 angepasst. Die Spindelmutter 130 weist an dem Grundkörper 132 im Bereich des Fixiermittels 80 einen Vorsprung 134 auf, welcher einen Abstand zwischen dem Grundkörper 132 und der zweiten Schiene 14 definiert. Die Spindelmutter 130 kann, bevorzugt im Crashfall, um eine im Wesentlichen horizontal verlaufende Achse, insbesondere um eine parallel zu einer Querrichtung y verlaufenden Achse, verschwenkbar sein.

Gemäß des ersten Ausführungsbeispiels ist an dem Grundkörper 132 der Spindelmutter 130 im Bereich der Crashbolzen 90 je eine Schulter 136 angeordnet, insbesondere angeformt, welche einen Abstand zwischen einem Kopf 92 des jeweiligen Crashbolzens 90 und dem Grundkörper 132 definiert. Der Kopf 92 ist vorliegend im Normalfall von der zweiten Schiene 14 beabstandet und gelangt erst nach einer Verformung des Längseinstellers 10 unter Last in einem Crashfall mit der zweiten Schiene 14 in Kontakt.

Eine einem Freiheitsgrad entsprechende Bewegungsmöglichkeit der Spindelmutter 130 ist vorliegend eine Drehung der Spindelmutter 130 um eine im Wesentlichen vertikal verlaufende Achse, insbesondere eine Achse Ades Fixiermittels 80. Im Bereich der Crashbolzen 90 kann sich zudem die zweite Schiene 14 begrenzt in Vertikalrichtung z zwischen dem Kopf 92 und der Spindelmutter 130 bewegen.

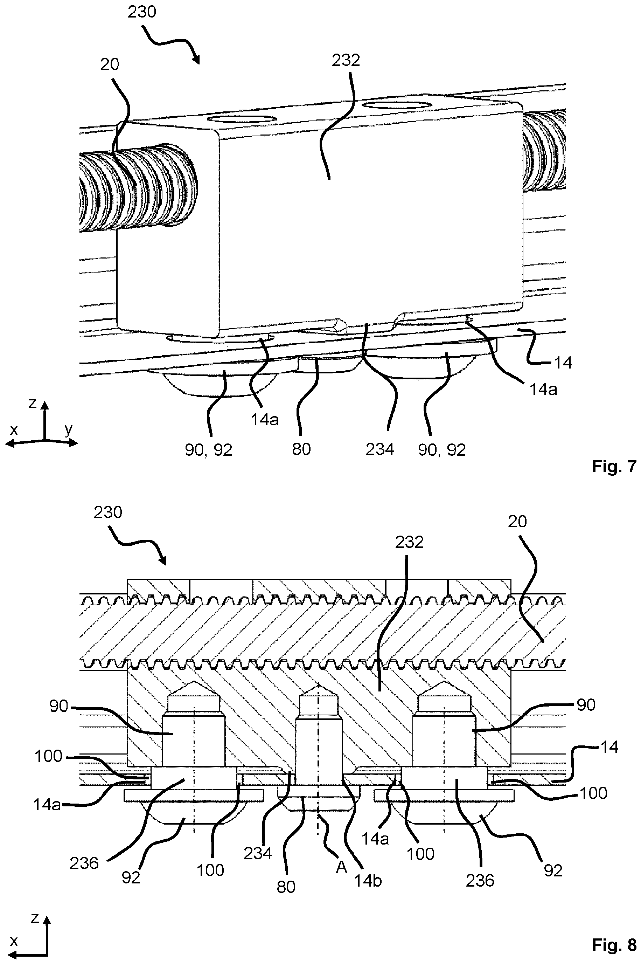

Die Figuren 7 und 8 zeigen die Spindelmutter 230 gemäß eines zweiten Ausführungsbeispiels. Die Spindelmutter 230 weist einen Grundkörper 232 auf. Die Spindelmutter 230 weist eine, insbesondere parallel zur Längsrichtung x orientierte, durchgehende Gewindebohrung mit einem Innengewinde auf. Das Innengewinde der Spindelmutter 230 steht mit einem Außengewinde der Spindel 20 in Wirkverbindung.

Die Spindelmutter 230 ist mittels zweier Crashbolzen 90 mit der zweiten Schiene 14 erbunden. Hierzu weist die zweite Schiene 14 zwei erste Öffnungen 14a auf, durch welche je ein Crashbolzen 90 hindurchgeführt ist. Ferner ist ein die Crashbolzen 90 umlaufender Spalt 100 zur zweiten Schiene 14 vorgesehen. Die Spindelmutter 230 ist mittels eines Fixiermittels 80, insbesondere eines in Längsrichtung x betrachtet mittig angeordneten Fixiermittels 80, fest mit der zweiten Schiene 14 verbunden. Hierzu weist die zweite Schiene 14 eine zweite Öffnung 14b für das Fixiermittel 80 auf. Der Innendurchmesser des zweiten Öffnung 14b ist an einen Außendurchmesser des Fixiermittels 80 angepasst. Die Spindelmutter 230 weist an dem Grundkörper 232 im Bereich des Fixiermittels 80 einen Vorsprung 234 auf, welcher einen Abstand zwischen dem Grundkörper 232 und der zweiten Schiene 14 definiert. Die Spindelmutter 230 kann, bevorzugt im Crashfall, um eine im Wesentlichen horizontal verlaufende Achse, insbesondere um eine parallel zu einer Querrichtung y verlaufenden Achse, verschwenkbar sein.

Gemäß des zweiten Ausführungsbeispiels weisen die Crashbolzen 90 je eine an einen Kopf 92 des jeweiligen Crashbolzens 90 angrenzende Schulter 236 auf, welche jeweils einen Abstand zwischen dem Kopf 92 und der Spindelmutter 230 definieren. Der Kopf 92 ist vorliegend im Normalfall von der zweiten Schiene 14 beabstandet und gelangt erst nach einer Verformung des Längseinstellers 10 unter Last in einem Crashfall mit der zweiten Schiene 14 in Kontakt.

Eine einem Freiheitsgrad entsprechende Bewegungsmöglichkeit der Spindelmutter 230 ist vorliegend eine Drehung der Spindelmutter 230 um eine im Wesentlichen vertikal verlaufende Achse, insbesondere eine Achse Ades Fixiermittels 80. Im Bereich der Crashbolzen 90 kann sich zudem die zweite Schiene 14 begrenzt in Vertikalrichtung z zwischen dem Kopf 92 und der Spindelmutter 230 bewegen.

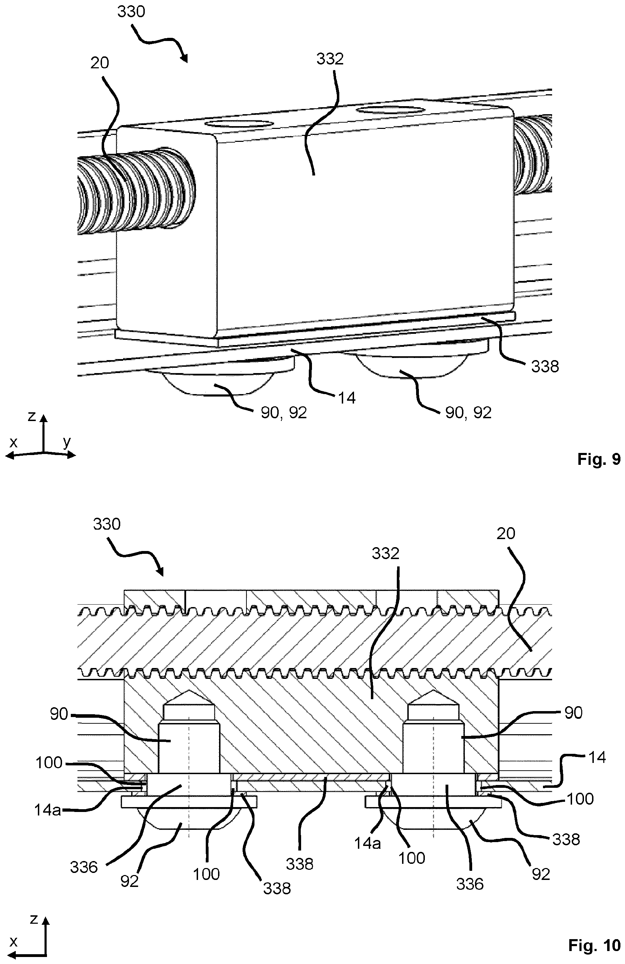

Die Figuren 9 und 10 zeigen die Spindelmutter 330 gemäß eines dritten, nicht erfindungsgemäßen Beispiels. Die Spindelmutter 330 weist einen Grundkörper 332 auf. Die Spindelmutter 330 weist eine, insbesondere parallel zur Längsrichtung x orientierte, durchgehende Gewindebohrung mit einem Innengewinde auf. Das Innengewinde der Spindelmutter 330 steht mit einem Außengewinde der Spindel 20 in Wirkverbindung.

Die Spindelmutter 330 ist mittels zweier Crashbolzen 90 mit der zweiten Schiene 14 verbunden. Hierzu weist die zweite Schiene 14 zwei erste Öffnungen 14a auf, durch welche je ein Crashbolzen 90 hindurchgeführt ist. Ferner ist ein die Crashbolzen 90 umlaufender Spalt 100 zur zweiten Schiene 14 vorgesehen. Die Crashbolzen 90 weisen je eine an einen Kopf 92 des jeweiligen Crashbolzens 90 angrenzende Schulter 336 auf, welche jeweils einen Abstand zwischen dem Kopf 92 und der Spindelmutter 330 definieren. Der Kopf 92 ist vorliegend im Normalfall von der zweiten Schiene 14 beabstandet und gelangt erst nach einer Verformung des Längseinstellers 10 unter Last, insbesondere in einem Crashfall, mit der zweiten Schiene 14 in Kontakt.

Zwischen dem Grundkörper 332 der Spindelmutter 330 und der zweiten Schiene 14 ist ein elastisches Mittel 338 angeordnet. Das elastische Mittel 338 ist vorliegend ein Puffer 338, insbesondere ein flacher Puffer 338, aus einem Kunststoff, insbesondere einem Gummi. Zwischen dem Kopf 92 der Crashbolzen 90 und der zweiten Schiene 14 ist je ein weiterer Puffer 338, insbesondere ein ringförmiger Puffer 338, aus einem Kunststoff, insbesondere einem Gummi, angeordnet.

Eine einem Freiheitsgrad entsprechende Bewegungsmöglichkeit der Spindelmutter 330 ist vorliegend eine Drehung der Spindelmutter 330 um eine im Wesentlichen vertikal verlaufende Achse, welche durch eine jeweilige Lage der Crashbolzen 90 in den ersten Öffnungen 14a der zweiten Schiene 14 begrenzt ist.

Eine weitere dem Freiheitsgrad entsprechende Bewegungsmöglichkeit der Spindelmutter 330 kann eine Bewegung der Spindelmutter 330 in Vertikalrichtung z sein, welche durch die elastischen Eigenschaften des Materials der Puffer 338 beeinflussbar ist.

Eine weitere dem Freiheitsgrad entsprechende Bewegungsmöglichkeit der Spindelmutter 330 kann eine Schwenkung der Spindelmutter 330 um eine im Wesentlichen horizontal verlaufende Achse, insbesondere entlang einer gedachten Verbindungslinie zwischen den beiden Crashbolzen 90, sein, welche ebenfalls durch die elastischen Eigenschaften des Materials der Puffer 338 beeinflussbar ist.

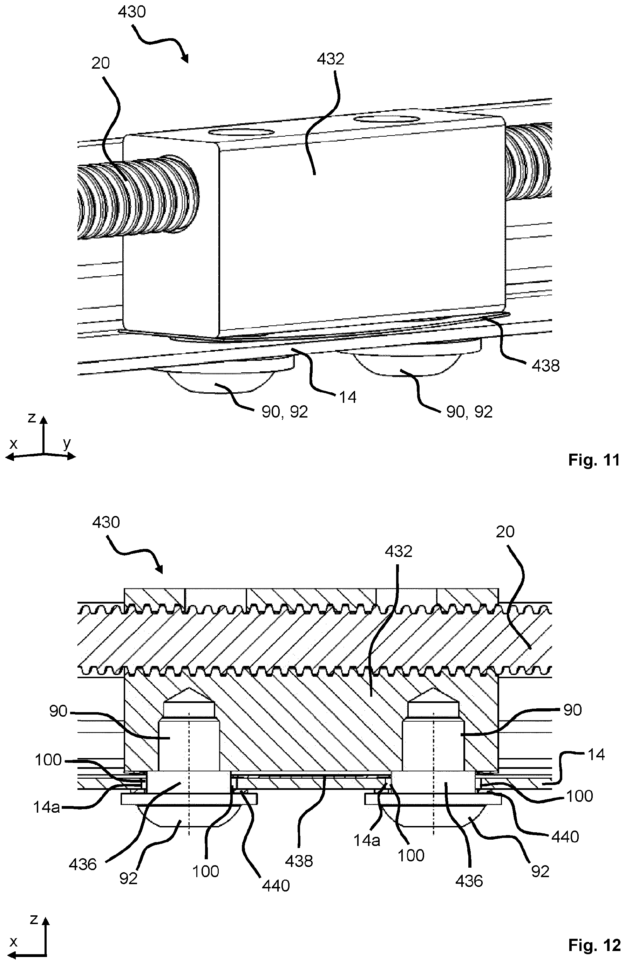

Die Figuren 11 und 12 zeigen die Spindelmutter 30 gemäß eines vierten, nicht erfindungsgemäßen Beispiels. Die Spindelmutter 430 weist einen Grundkörper 432 auf. Die Spindelmutter 430 weist eine, insbesondere parallel zur Längsrichtung x orientierte, durchgehende Gewindebohrung mit einem Innengewinde auf. Das Innengewinde der Spindelmutter 430 steht mit einem Außengewinde der Spindel 20 in Wirkverbindung.

Die Spindelmutter 430 ist mittels zweier Crashbolzen 90 mit der zweiten Schiene 14 verbunden. Hierzu weist die zweite Schiene 14 zwei erste Öffnungen 14a auf, durch welche je ein Crashbolzen 90 hindurchgeführt ist. Ferner ist ein die Crashbolzen 90 umlaufender Spalt 100 zur zweiten Schiene 14 vorgesehen. Die Crashbolzen 90 weisen je eine an einen Kopf 92 des jeweiligen Crashbolzens 90 angrenzende Schulter 436 auf, welche jeweils einen Abstand zwischen dem Kopf 92 und der Spindelmutter 430 definieren. Der Kopf 92 ist vorliegend im Normalfall von der zweiten Schiene 14 beabstandet und gelangt erst nach einer Verformung des Längseinstellers 10 unter Last, insbesondere in einem Crashfall, mit der zweiten Schiene 14 in Kontakt.

Zwischen dem Grundkörper 432 der Spindelmutter 430 und der zweiten Schiene 14 ist ein elastisches Mittel angeordnet. Zwischen dem Grundkörper 432 der Spindelmutter 430 und der zweiten Schiene 14 kann eine Metallfeder 438, insbesondere eine metallische Blattfeder 438, angeordnet sein. Zwischen dem Kopf 92 der Crashbolzen 90 und der zweiten Schiene 14 kann je einen Puffer 440, insbesondere ein ringförmiger Puffer 440 angeordnet sein. Der Puffer 440 ist vorliegend aus Metall gefertigt.

Alternativ kann der Puffer 440 einerseits aus Metall und andererseits aus Kunststoff oder Gummi gefertigt sein. Dabei kann eine dem Kopf 92 zugewandte Seite des Puffers 440 aus Metall gefertigt sein und eine der zweiten Schiene 14 zugewandte Seite des Puffers 440 aus Kunststoff und/oder Gummi gefertigt sein. Alternativ kann eine der zweiten Schiene 14 zugewandte Seite des Puffers 440 aus Metall gefertigt sein und eine dem Kopf 92 zugewandte Seite des Puffers 440 aus Kunststoff und/oder Gummi gefertigt sein.

Eine einem Freiheitsgrad entsprechende Bewegungsmöglichkeit der Spindelmutter 430 ist vorliegend eine Drehung der Spindelmutter 430 um eine im Wesentlichen vertikal verlaufende Achse, welche durch eine jeweilige Lage der Crashbolzen 90 in den ersten Öffnungen 14a der zweiten Schiene 14 begrenzt ist.

Eine weitere dem Freiheitsgrad entsprechende Bewegungsmöglichkeit der Spindelmutter 430 kann eine Bewegung der Spindelmutter 430 in Vertikalrichtung z sein, welche durch die elastischen Eigenschaften des Materials der Metallfeder 438 beeinflussbar ist.

Eine weitere dem Freiheitsgrad entsprechende Bewegungsmöglichkeit der Spindelmutter 430 kann eine Schwenkung der Spindelmutter 430 um eine im Wesentlichen horizontal verlaufende Achse, insbesondere entlang einer gedachten Verbindungslinie zwischen den beiden Crashbolzen 90, sein, welche ebenfalls durch die elastischen Eigenschaften des Materials der Metallfeder 438 beeinflussbar und durch die Dimensionen der ersten Öffnungen 14a und der Köpfe 92 der Crashbolzen 90 begrenzt ist.

Obwohl die Erfindung in den Figuren und der vorausgegangenen Darstellung im Detail beschrieben wurde, sind die Darstellungen illustrativ und beispielhaft und nicht einschränkend zu verstehen. Insbesondere ist die Wahl der zeichnerisch dargestellten Proportionen der einzelnen Elemente nicht als erforderlich oder beschränkend auszulegen. Weiterhin ist die Erfindung insbesondere nicht auf die erläuterten Ausführungsbeispiele beschränkt. Weitere Varianten der Erfindung und ihre Ausführung ergeben sich für den Fachmann aus der vorangegangenen Offenbarung, den Figuren und den Ansprüchen.

In den Ansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Ansprüchen genannten Einheiten beziehungsweise Einrichtungen ausführen.

### Bezugszeichenliste

- 1: Fahrzeugsitz
- 2: Sitzteil
- 4: Lehne
- 10: Längseinsteller
- 12: erste Schiene
- 14: zweite Schiene
- 14a: erste Öffnung
- 14b: zweite Öffnung
- 16: Innenkanal
- 20: Spindel
- 20a: vorderer Endabschnitt (der Spindel 20)
- 20b: hinterer Endabschnitt (der Spindel 20)
- 50: Spindelgetriebe
- 60: Motor
- 70: Motorträger
- 80: Fixiermittel
- 90: Crashbolzen
- 92: Kopf
- 100: Spalt
- 130: Spindelmutter
- 132: Grundkörper
- 134: Vorsprung
- 136: Schulter
- 230: Spindelmutter
- 232: Grundkörper
- 234: Vorsprung
- 236: Schulter
- 330: Spindelmutter
- 332: Grundkörper
- 336: Schulter
- 338: elastisches Mittel, Puffer
- 430: Spindelmutter
- 432: Grundkörper
- 436: Schulter
- 438: Federmittel, Blattfeder
- 440: Puffer
- S: Spindelachse (der Spindel 20)
- A: Achse (des Fixiermittels)
- x: Längsrichtung
- y: Querrichtung
- z: Vertikalrichtung

## Patentansprüche

1. Längseinsteller (10), insbesondere für einen Fahrzeugsitz (1), der Längseinsteller (10) aufweisend mindestens ein Schienenpaar, welches aus einer ersten Schiene (12) und einer relativ zur ersten Schiene (12) in Längsrichtung (x) verschiebbaren zweiten Schiene (14) gebildet ist, wobei die Schienen (12, 14) unter Bildung eines Innenkanals (16) einander wechselseitig umgreifen, wobei in dem Innenkanal (16) eine mit der zweiten Schiene (14) verbundene Spindelmutter (130; 230) und eine mit der Spindelmutter (130; 230) wirkverbundene Spindel (20) angeordnet sind, wobei an einem Ende der ersten Schiene (12) ein mittels eines Motors (60) antreibbares und mit der Spindel (20) zusammenwirkendes Spindelgetriebe (50) angeordnet ist, wobei die Spindelmutter (130; 230) derart an der zweiten Schiene (14) fixiert ist, dass die Spindelmutter (130; 230) einen Freiheitsgrad von wenigstens eins aufweist, wobei die Spindelmutter (130; 230) mittels eines Fixiermittels (80) mit der zweiten Schiene (14) verbunden ist, wobei das Fixiermittel (80) als Schraube oder Bolzen ausgebildet ist, wobei im Bereich des Fixiermittels (80) an einem Grundkörper (132; 232) der Spindelmutter (130; 230) oder an der zweiten Schiene (14) ein Vorsprung (134; 234) vorgesehen ist, welcher einen Abstand zwischen dem Grundkörper (132; 232) und der zweiten Schiene (14) definiert, wobei die Spindelmutter (130, 230) im Crashfall mittels wenigstens eines Crashbolzens (90), insbesondere zweier Crashbolzen (90), mit der zweiten Schiene (14) verbindbar ist, wobei an dem Grundkörper (132; 232) im Bereich des wenigstens einen Crashbolzens (90) je eine Schulter (136) angeordnet ist oder wobei die Crashbolzen (90) je eine an einen Kopf (92) des jeweiligen Crashbolzens (90) angrenzende Schulter (236) aufweisen, durch welche ein Abstand zwischen einem Kopf (92) des jeweiligen Crashbolzens (90) und dem Grundkörper (132) definiert ist, wobei der Kopf (92) im Normalfall von der zweiten Schiene (14) beabstandet ist und erst nach einer Verformung des Längseinstellers (10) unter Last im Crashfall mit der zweiten Schiene (14) in Kontakt gelangt, **dadurch gekennzeichnet, dass** die Spindelmutter (130; 230) mittels eines in Längsrichtung (x) betrachtet mittig angeordneten Fixiermittels (80) fest mit der zweiten Schiene (14) verbunden ist.

2. Längseinsteller (10) gemäß Anspruch 1, wobei die Crashbolzen (90) durch je eine erste Öffnung (14a) in der zweiten Schiene (14) hindurchgeführt sind.

3. Längseinsteller (10) gemäß einem der Ansprüche 1 oder 2, wobei ein jeweils einen Crashbolzen (90) in radialer Richtung umlaufender Spalt (100) zur zweiten Schiene (14) vorgesehen ist.

4. Längseinsteller (10) gemäß Anspruch 3, wobei ein jeweils einen Crashbolzen (90) in radialer Richtung umlaufender Spalt (100) zu den ersten Öffnungen (14a) der zweiten Schiene (14) vorgesehen ist.

5. Längseinsteller (10) gemäß einem der vorstehenden Ansprüche, wobei die zweite Schiene (14) den Vorsprung aufweist.

6. Längseinsteller (10) gemäß einem der vorstehenden Ansprüche, wobei die Spindel (20) an einem vorderen Endabschnitt (20a) der Spindel (20) in dem Spindelgetriebe (50) und an einem hinteren Endabschnitt (20b) der Spindel (20) in einem Drehlager der ersten Schiene (12) gelagert ist.

7. Fahrzeugsitz (1) mit einem Längseinsteller (10) gemäß einem der vorherstehenden Ansprüche.

## Claims

1. Longitudinal adjuster (10), in particular for a vehicle seat (1), the longitudinal adjuster (10) having at least one pair of rails formed from a first rail (12) and a second rail (14), which can be displaced in the longitudinal direction (x) relative to the first rail (12), wherein the rails (12, 14) engage alternately around one another to form an inner channel (16), wherein the inner channel (16) has arranged within it a spindle nut (130; 230), which is connected to the second rail (14), and a spindle (20), which is operatively connected to the spindle nut (130; 230), wherein a spindle-gear mechanism (50), which can be driven by means of a motor (60) and interacts with the spindle (20), is arranged at one end of the first rail (12), wherein the spindle nut (130; 230) is fixed on the second rail (14) such that the spindle nut (130; 230) has a degree of freedom of at least one, wherein the spindle nut (130; 230) is connected to the second rail (14) by a fixing means (80), wherein the fixing means (80) is in the form of a screw or bolt, wherein a protrusion (134; 234) is provided in the region of the fixing means (80), on a main body (132; 232) of the spindle nut (130; 230) or on the second rail (14), the protrusion defining a distance between the main body (132; 232) and the second rail (14), wherein, in the event of a crash, the spindle nut (130, 230) can be connected to the second rail (14) by means of at least one crash bolt (90), in particular two crash bolts (90), wherein a respective shoulder (136) is arranged on the main body (132; 232), in the region of the at least one crash bolt (90), or wherein the crash bolts (90) each have a shoulder (236), which is adjacent to a head (92) of the respective crash bolt (90) and which defines a distance between a head (92) of the respective crash bolt (90) and the main body (132), wherein the head (92) is at a distance apart from the second rail (14) in normal conditions and it is only once the longitudinal adjuster (10) has been deformed under load, in the event of a crash, that the head comes into contact with the second rail (14), **characterized in that** the spindle nut (130; 230) is fixedly connected to the second rail (14) by a centrally arranged fixing means (80), as seen in the longitudinal direction (x).

2. Longitudinal adjuster (10) according to Claim 1, wherein the crash bolts (90) are guided through a respective first opening (14a) in the second rail (14).

3. Longitudinal adjuster (10) according to either of Claims 1 and 2, wherein a gap (100) is provided in relation to the second rail (14), the gap encircling a respective crash bolt (90) in the radial direction.

4. Longitudinal adjuster (10) according to Claim 3, wherein a gap (100) is provided in relation to the first openings (14a) of the second rail (14), the gap encircling a respective crash bolt (90) in the radial direction.

5. Longitudinal adjuster (10) according to one of the preceding claims, wherein the second rail (14) has the protrusion.

6. Longitudinal adjuster (10) according to one of the preceding claims, wherein, at a front end portion (20a) of the spindle (20), the spindle (20) is mounted in the spindle-gear mechanism (50) and, at a rear end portion (20b) of the spindle (20), the spindle (20) is mounted in a rotary bearing of the first rail (12).

7. Vehicle seat (1) having a longitudinal adjuster (10) according to one of the preceding claims.

## Revendications

1. Dispositif de réglage longitudinal (10), notamment pour un siège de véhicule (1), le dispositif de réglage longitudinal (10) présentant au moins une paire de rails, qui est formée d'un premier rail (12) et d'un deuxième rail (14) déplaçable par rapport au premier rail (12) dans la direction longitudinale (x), les rails (12, 14) s'entourant mutuellement en formant un canal intérieur (16), un écrou de broche (130 ; 230) relié au deuxième rail (14) et une broche (20) en liaison fonctionnelle avec l'écrou de broche (130 ; 230) étant agencés dans le canal intérieur (16), une transmission à broche (50) pouvant être entraînée au moyen d'un moteur (60) et coopérant avec la broche (20) étant agencée à une extrémité du premier rail (12),
l'écrou de broche (130 ; 230) étant fixé sur le deuxième rail (14) de telle sorte que l'écrou de broche (130 ; 230) présente un degré de liberté d'au moins un, l'écrou de broche (130 ; 230) étant relié au deuxième rail (14) au moyen d'un moyen de fixation (80), le moyen de fixation (80) étant configuré sous forme de vis ou de boulon, une saillie (134 ; 234) étant prévue dans la zone du moyen de fixation (80) sur un corps de base (132 ; 232) de l'écrou de broche (130 ; 230) ou sur le deuxième rail (14), laquelle définit une distance entre le corps de base (132 ; 232) et le deuxième rail (14), l'écrou de broche (130, 230) pouvant être relié au deuxième rail (14) en cas de collision au moyen d'au moins un boulon de collision (90), notamment de deux boulons de collision (90), un épaulement (136) étant agencé sur le corps de base (132 ; 232) dans la zone de l'au moins un boulon de collision (90) ou les boulons de collision (90) présentant chacun un épaulement (236) adjacent à une tête (92) du boulon de collision (90) respectif, par lequel est définie une distance entre une tête (92) du boulon de collision (90) respectif et le corps de base (132), la tête (92) étant espacée du deuxième rail (14) dans le cas normal et n'entrant en contact avec le deuxième rail (14) qu'après une déformation du dispositif de réglage longitudinal (10) sous charge en cas de collision, **caractérisé en ce que** l'écrou de broche (130 ; 230) est relié de manière fixe au deuxième rail (14) au moyen d'un moyen de fixation (80) agencé au centre, considéré dans la direction longitudinale (x).

2. Dispositif de réglage longitudinal (10) selon la revendication 1, dans lequel les boulons de collision (90) passent chacun à travers une première ouverture (14a) dans le deuxième rail (14).

3. Dispositif de réglage longitudinal (10) selon l'une quelconque des revendications 1 ou 2, dans lequel il est prévu une fente (100) faisant respectivement le tour d'un boulon de collision (90) dans la direction radiale vers le deuxième rail (14).

4. Dispositif de réglage longitudinal (10) selon la revendication 3, dans lequel il est prévu une fente (100) faisant respectivement le tour d'un boulon de collision (90) dans la direction radiale vers les premières ouvertures (14a) du deuxième rail (14).

5. Dispositif de réglage longitudinal (10) selon l'une quelconque des revendications précédentes, dans lequel le deuxième rail (14) présente la saillie.

6. Dispositif de réglage longitudinal (10) selon l'une quelconque des revendications précédentes, dans lequel la broche (20) est montée au niveau d'une section d'extrémité avant (20a) de la broche (20) dans la transmission à broche (50) et au niveau d'une section d'extrémité arrière (20b) de la broche (20) dans un palier de rotation du premier rail (12).

7. Siège de véhicule (1) avec un dispositif de réglage longitudinal (10) selon l'une quelconque des revendications précédentes.
